# EUROPÄISCHE PATENTANMELDUNG

(11) **EP 0 638 972 A1**
(43) Veröffentlichungstag der Anmeldung: **15.02.1995**
(21) Anmeldenummer: 94112547.8
(22) Anmeldetag: 11.08.1994
(51) Int. Cl.: H02G 3/20, H02G 3/10, F21V 21/02

(54) **Elektro-Installationsdose für die Unterputz-Installation**

(30) Priorität: 14.08.1993 DE 4327354
(71) Anmelder: Mendel, Heinrich, D-91257 Trockau (DE)
(72) Erfinder: Mendel, Heinrich, D-91257 Trockau (DE)
(74) Vertreter: LOUIS, PÖHLAU, LOHRENTZ & SEGETH

(57) **Zusammenfassung**

Es wird eine elektrische Installationsdose (10) beschrieben, die zur Unterputz-Installation vorgesehen ist. Die Installationsdose (10) weist eine Zylinderwand (20) auf, die innenseitig mit einer Halteeinrichtung (26) zur loslösbaren Halterung eines Brückenelementes (28) versehen ist. Das zweckmäßigerweise nach Art eines Bajonettverschlusses an der Installationsdose (10) loslösbar fixierbare Brückenelement (28) weist mindestens ein Mutterelement (48) auf, das am Brückenelement (28) in radialer Richtung der Installationsdose (10) linear verstellbeweglich angeordnet ist.

## Beschreibung

Die Erfindung betrifft eine zur Unterputz-Installation vorgesehene Elektro-Installationsdose mit einer Zylinderwand.

Derartige Installationsdosen sind allgemein bekannt und kommen bspw. als Schalterdosen, Abzweig-Schalterdosen, Wandauslaßdosen, Deckendosen o.dgl. zum Einsatz. Insbes. dann, wenn eine solche bekannte Installationsdose in Kombination mit einer Wand- oder Deckenleuchte o.dgl. zur Anwendung gelangt, ist es bislang erforderlich, nicht nur für die Installationsdose eine entsprechende Wand- bzw. Deckenaussparung vorzusehen, sondern außerdem auch noch die Leuchte an der Wand bzw. der Decke zu befestigen. Das geschieht zweckmäßigerweise mittels Schraubdübeln. Diese bedingen nicht nur einen Arbeitsaufwand zur Herstellung der entsprechenden Bohrungen, sondern es ergibt sich außerdem der Mangel, daß die besagten Bohrungen in der Wand bzw. Decke verbleiben, wenn die Leuchte am entsprechenden Ort nicht mehr benötigt wird.

Der Erfindung liegt die Aufgabe zugrunde, eine Elektro-Installationsdose der eingangs genannten Art zu schaffen, mit der es einfach und ohne größeren Arbeitsaufwand möglich ist, eine Leuchte o.dgl. an einer Wand oder Decke zu befestigen und gleichzeitig die entsprechenden Elektroinstallationen vorzunehmen.

Diese Aufgabe wird erfindungsgemäß dadurch gelöst, daß die Zylinderwand der Installationsdose innenseitig mit einer Halteeinrichtung zur loslösbaren Halterung eines Brückenelementes versehen ist, und daß das Brückenelement mindestens ein Mutterelement aufweist, das am Brückenelement linear verstellbeweglich angeordnet ist. Mit Hilfe des Brückenelementes bzw. des mindestens einen am Brückenelement vorgesehenen Mutterelementes ist es einfach und zeitsparend möglich, eine Lampe o.dgl. am mindestens einen Mutterelement zu fixieren, nachdem die Installationsdose in der entsprechenden Wand bzw. Decke befestigt worden ist. Dadurch, daß das mindestens eine Mutterelement am Brückenelement der Installationsdose verstellbar ist, ist es einfach möglich, jede beliebige Lampe o.dgl. an der Installationsdose bzw. deren Brückenelement festzuschrauben, sobald das Mutterelement am Brückenelement entsprechend eingestellt worden ist. Zweckmäßigerweise ist das Brückenelement mit zwei verstellbaren Mutterelementen versehen, um eine mechanisch feste und zuverlässige Fixierung einer Lampe o.dgl. an der Installationsdose zu ermöglichen. Um die erfindungsgemäße Installationsdose in einer Wand- bzw. Deckenaussparung zuverlässig befestigen zu können, ist es vorteilhaft, wenn die Zylinderwand der Installationsdose zu ihrer Bodenseite hin konisch erweitert ausgebildet ist.

Als zweckmäßig hat es sich erwiesen, wenn bei der erfindungsgemäßen Installationsdose die Halteeinrichtung von einem um die Wand innenseitig umlaufenden Bund und von sich diametral gegenüberliegenden Widerlagerrippen gebildet ist, die vom Bund durch einen Spalt beabstandet sind, der zur Aufnahme von Befestigungsansätzen des Brückenelementes vorgesehen ist. Das Brückenelement ist zweckmäßigerweise derartig ausgebildet, daß seine Längsabmessung zwischen den beiden voneinander abgewandten Befestigungsansätzen an den lichten Innendurchmesser der Zylinderwand der Installationsdose angepaßt ist. Die Spaltbreite zwischen dem umlaufenden Bund und den davon in axialer Richtung der Dose beabstandeten Widerlagerrippen ist an die Dicke der beiden voneinander abgewandten Befestigungansätze des Brückenelementes angepaßt. Der Bund und die sich diametral gegenüberliegenden Widerlagerrippen bilden demzufolge für das Brückenelement bzw. dessen Befestigungsansätze einen sog. Bajonettverschluß, so daß es möglich ist, das Brückenelement im Bedarfsfall von der Installationsdose zu entfernen, um die Installationsdose bspw. für einen Schalter, eine Steckdose o.dgl. zu verwenden.

Eine Ausbildung der erfindungsgemäßen Installationsdose ist dadurch gekennzeichnet, daß ein Paar sich diametral gegenüberliegende Widerlagerrippen vorgesehen sind. Eine solche Installationsdose ist insbes. dazu vorgesehen, das Brückenelement in einer bestimmten Position der Installationsdose anzuordnen. In Abhängigkeit von der Lokalisierung der Installationsdose kann das Brückenelement also entweder vertikal oder horizontal positioniert sein. Eine Positionierung des Brückenelementes entweder in einer ersten oder in einer zweiten Position, d.h. bspw. in einer horizontalen oder in einer vertikalen Position ist möglich, wenn zwei Paare von sich jeweils diametral gegenüberliegenden Widerlagerrippen vorgesehen sind, die in radialer Richtung der Installationsdose zueinander senkrecht orientiert sind. Der Raum zwischen benachbarten Widerlagerrippen muß in jedem Fall so breit sein, daß es möglich ist, das Brückenelement im besagten Raum zwischen benachbarten Widerlagerrippen in die Installationsdose einzusetzen und durch nachfolgendes Verdrehen des Brückenelementes eine bajonettartige Verrastung desselben zwischen dem umlaufenden Bund und den entsprechenden Widerlagerrippen der Installationsdose zu bewerkstelligen.

Als vorteilhaft hat es sich erwiesen, wenn das mit seinen Befestigungsabsätzen zwischen dem umlaufenden Bund und den Widerlagerrippen festgelegte Brückenelement einen Mittelabschnitt aufweist, der mit der ringförmigen Stirnfläche der Installationsdose zumindest annähernd bündig abschließt. Durch eine solche Ausbildung ergibt sich nämlich der Vorteil, daß die an der erfindungsgemäßen Installationsdose bzw. deren Brückenelement festzuschraubende Einrichtung wie eine Wand- oder Deckenleuchte, ein Seil o.dgl. mit relativ kurzen Schrauben mit dem mindestens einen am Brückenelement beweglich vorgesehenen Mutterelement verschraubbar ist. Dabei wird in vorteilhafterweise gleichzeitig beim Verschrauben der besagten Einrichtung nicht nur das entsprechende Mutterelement gegen das Brückenelement bzw. dessen Mittelabschnitt verspannt, sondern gleichzeitig auch das Brückenelement mit seinen beiden Befestigungsansätzen gegen die entsprechenden Widerlagerrippen gezwängt, während die zu befestigende Einrichtung andererseits gegen die Wand bzw. Decke gedrückt wird.

Bei der erfindungsgemäßen Installationsdose kann das mindestens eine Mutterelement entlang einer im Mittelabschnitt radial umlaufenden Linearführung linearbeweglich sein. Hierbei kann die Linearführung mit einer Hinterschneidung ausgebildet und das mindestens eine Mutterelement eine Vierkantmutter sein. Die Hinterschneidung kann schwalbenschwanzförmig mit Schrägflächen oder mit abgestuften Flächen ausgebildet sein. Eine abgestufte Ausbildung der Hinterschneidung ist insbes. dann zweckmäßig, wenn handelsübliche Vierkantmuttern konstanter Wanddicke zum Einsatz gelangen.

Insgesamt ergibt sich erfindungsgemäß eine Elektro-Installationsdose einfachen Aufbaus, die den Vorteil aufweist, daß sie nicht nur zur Unterbringung entsprechenden Elektroinstallationsmaterials wie Anschlußklemmen o.dgl. geeignet ist, sondern daß an ihr außerdem auch ohne größeren Aufwand Elektroeinrichtungen wie Beleuchtungskörper o.dgl. problemlos befestigbar sind, ohne daß es erforderlich ist, zur Befestigung derartiger Einrichtungen in der entsprechenden Wand oder Decke eigene Dübellöcher bohren zu müssen.

Weitere Einzelheiten, Merkmale und Vorteile ergeben sich aus der nachfolgenden Beschreibung von in der Zeichnung dargestellten Ausführungsbeispielen der erfindungsgemäßen Elektro-Installationsdose. Es zeigen:
- Fig. 1: einen Schnitt durch eine abschnittweise gezeichnete Wand, in der eine erfindungsgemäße Installationsdose angeordnet ist, wobei an der Wand eine Elektroeinrichtung wie eine teilweise aufgeschnitten und im übrigen abschnittweise gezeichnete Wandleuchte befestigt ist,
- Fig. 2: eine Ansicht der Installationsdose in Blickrichtung des Pfeiles II in Fig. 1, d.h. in Blickrichtung von oben, und
- Fig. 3: eine der Fig. 2 ähnliche Darstellung einer zweiten Ausbildung der Installationsdose.

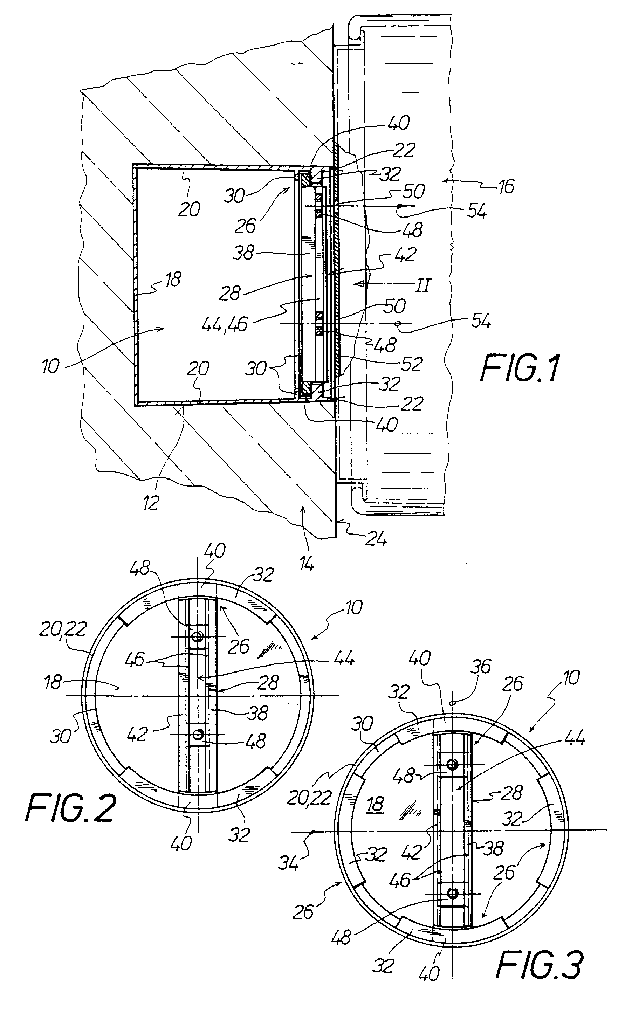

Fig. 1 zeigt in einem Schnitt eine Elektro-Installationsdose 10, die in einer passenden Aussparung 12 einer abschnittweise gezeichneten Wand 14 befestigt ist. An der Wand 14 ist eine Elektroeinrichtung wie bspw. eine Wandleuchte 16 angeordnet, die teilweise aufgeschnitten und im übrigen abschnittweise gezeichnet ist.

Die Installationsdose 10 weist einen Boden 18 und eine vom Boden 18 wegstehende Zylinderwand 20 auf. Die Installationsdose 10 wird in der Aussparung 12 der Wand 14 derartig fixiert, daß die vom Boden 18 abgewandte ringförmige Stirnfläche 22 der Zylinderwand 20 mit der Wandfläche 24 bündig abschließt bzw. geringfügig gegen die Wandfläche 24 nach innen zurückversetzt ist.

Die Wand 20 der Installationsdose 10 ist innenseitig mit einer Halteeinrichtung 26 für ein Brückenelement 28 versehen. Zu diesem Zweck kann die Halteeinrichtung 26 nach Art eines Bajonettverschlusses mit einem Bund 30 und mit Widerlagerrippen 32 ausgebildet sein, wobei der Bund 30 innenseitig um die Zylinderwand 20 ringförmig umläuft und die vom Bund 30 beabstandeten Widerlagerrippen 32 sich diametral gegenüberliegen.

In Fig. 2 ist eine Ausbildung der Installationsdose 10 in Blickrichtung von oben dargestellt, wobei die Installationsdose 10 mit zwei sich diametral gegenüberliegenden Widerlagerrippen 32 ausgebildet ist. Demgegenüber ist in Fig. 3 eine Ausführungsform der Installationsdose 10 dargestellt, die mit zwei Paaren sich diametral gegenüberliegender Widerlagerrippen 32 ausgebildet ist. Die beiden Widerlagerrippen-Paare sind hierbei in radialer Richtung der Installationsdose 10 zueinander senkrecht orientiert, was durch die strichpunktierten Linien 34 und 36 angedeutet ist.

Das Brückenelement 28 weist einen Mittelabschnitt 38 und zwei voneinander abgewandte Befestigungsansätze 40 auf. Das Brückenelement 28 ist mit seinen Befestigungsansätzen 40 zwischen dem umlaufenden Bund 30 und den sich diametral gegenüberliegenden Widerlagerrippen 32 bajonettverschlußartig festgelegt, wobei es möglich ist, das Brückenelement 28 im Bedarfsfall von der Installationsdose 10 zu entfernen. Der Mittelabschnitt 38 des Brückenelementes 28 ist derartig gestaltet, daß die vorderseitige Stirnfläche 42 des Mittelabschnittes 38 mit der ringförmigen Stirnfläche 22 der Installationsdose 10 zumindest annähernd bündig abschließt, wenn das Brückenelement 28 in der Installationsdose 10 angeordnet ist. Zweckmäßigerweise ist die besagte Stirnfläche 42 des Mittelabschnittes 38 des Brückenelementes 28 gegen die ringförmige Stirnfläche 22 der Installationsdose 10 nach innen geringfügig zurückversetzt. Keinesfalls soll die Stirnfläche 42 über die Wandfläche 24 der Wand 14 bzw. einer Decke überstehen.

Das Brückenelement 28 bzw. dessen Mittelabschnitt 38 ist mit einer Linearführung 44 ausgebildet. Die Linearführung 44 ist schwalbenschwanzähnlich mit einer abgestuften Hinterschneidung 46 ausgebildet, wobei sich zwei Längsrillen entlang des Mittelabschnittes 38 des Brückenelementes 28 erstrecken. Die Linearführung 44 dient zur Aufnahme und beweglichen Lagerung mindestens eines Mutterelementes 48, wobei in den Figuren 1, 2 und 3 jeweils zwei Mutterelemente 48 dargestellt sind. Die Mutterelemente 48 sind entlang der im Brückenelement 28 ausgebildeten Linearführung 44 linear derartig verstellbar, daß die Mutterelemente 48 bspw. mit Bohrungen 50 im Boden 52 der abschnittweise gezeichneten Wandleuchte 16 (sh. Fig. 1) axial fluchten. Durch die Bohrungen 50 im Boden 52 können Schrauben durchgesteckt und mit den Mutterelementen 48 fest verschraubt werden. Von diesen Befestigungsschrauben sind in Fig. 1 nur die Mittellinien 54 angedeutet. Aus den Figuren 2 und 3 ist ersichtlich, daß die Mutterelemente 48 als handelsübliche Vierkantmuttern ausgebildet sein können. Im zusammengebauten Zustand der Dose 10 sind die Mutterelemente 48 im Mittelabschnitt 38 des Brückenelementes 28 unverlierbar angeordnet.

In den Figuren 1 bis 3 sind gleiche Einzelheiten jeweils mit denselben Bezugsziffern bezeichnet, so daß es sich erübrigt, in Verbindung mit allen diesen Zeichnungsfiguren alle Einzelheiten jeweils detailliert zu beschreiben.

## Patentansprüche

1. Zur Unterputz-Installation vorgesehene Elektro-Installationsdose mit einer Zylinderwand (20),
**dadurch gekennzeichnet**,
daß die Wand (20) innenseitig mit einer Halteeinrichtung (26) zur loslösbaren Halterung eines Brückenelementes (28) versehen ist, und daß das Brückenelement (28) mindestens ein Mutterelement (48) aufweist, das am Brückenelement (28) in radialer Richtung der Installationsdose (10) linear verstellbeweglich angeordnet ist.

2. Installationsdose nach Anspruch 1,
**dadurch gekennzeichnet**,
daß die Halteeinrichtung (26) von einem um die Wand (20) innenseitig umlaufenden Bund (30) und sich diametral gegenüberliegenden Widerlagerrippen (32) gebildet ist, die vom Bund (30) durch einen Spalt beabstandet sind, der zur Aufnahme von Befestigungsansätzen (40) des Brückenelementes (28) vorgesehen ist.

3. Installationsdose nach Anspruch 2,
**dadurch gekennzeichnet**,
daß ein Paar sich diametral gegenüberliegende Widerlagerrippen (32) vorgesehen sind.

4. Installationsdose nach Anspruch 2,
**dadurch gekennzeichnet**,
daß zwei Paare von sich jeweils diametral gegenüberliegenden Widerlagerrippen (32) vorgesehen sind, die in radialer Richtung (34, 36) zueinander senkrecht orientiert sind.

5. Installationsdose nach Anspruch 2,
**dadurch gekennzeichnet**,
daß das mit seinen Befestigungsansätzen (40) zwischen dem umlaufenden Bund (30) und den Widerlagerrippen (32) festgelegte Brückenelemente (28) einen Mittelabschnitt (38) aufweist, der mit der ringförmigen Stirnfläche (22) der Installationsdose (10) zumindest annähernd bündig abschließt.

6. Installationsdose nach Anspruch 1 und 5,
**dadurch gekennzeichnet**,
daß das mindestens eine Mutterelement (48) entlang einer im Mittelabschnitt (38) des Brückenelementes (28) radial verlaufenden Linearführung (44) linear beweglich ist.

7. Installationsdose nach Anspruch 6,
**dadurch gekennzeichnet,**
daß die Linearführung (44) mit einer Hinterschneidung (46) ausgebildet und das mindestens eine Mutterelement (48) eine Vierkantmutter ist.
